# EUROPEAN PATENT APPLICATION

(11) **EP 4 844 696 A1**
(43) Date of publication of application: **25.11.2026**
(21) Application number: 26176071.4
(22) Date of filing: 01.05.2026
(51) Int. Cl.: G06V 10/74, B64D 45/00, B64D 47/00, G06V 10/764

(54) **AIRCRAFT ANOMALY DETECTION**

(30) Priority: 21.05.2025 US 202519214838
(71) Applicant: HONEYWELL INTERNATIONAL INC., Charlotte, NC 28202 (US)
(72) Inventor: WANG, Yunyu, Charlotte, 28202 (US); CHEN, Shuai, Charlotte, 28202 (US); DENG, Zhenping, Charlotte, 28202 (US)
(74) Representative: Haseltine Lake Kempner LLP

(57) **Abstract**

A system comprising: memory; and processing circuitry having access to the memory and configured to: compare a baseline image of an aircraft and a live image of the aircraft; determine, based on the comparison of the baseline image of the aircraft and the live image of the aircraft, an anomaly associated with operation of the aircraft; generate, based on determining the anomaly, an alert associated with the anomaly; and output the alert to a notification device of the aircraft.

## Description

### TECHNICAL FIELD

The disclosure relates to aviation systems and more specifically to anomaly detection associated with aircraft operation.

### BACKGROUND

Aircraft, such as commercial aircraft or civil aircraft, may include cameras that capture visual, real-time surroundings of the aircraft.

### SUMMARY

In general, the disclosure describes systems, methods, and devices for on-board processing of images capturing real-time surroundings of an aircraft to detect anomalies associated with operation of the aircraft. An on-board aircraft control system, for example, may utilize image processing and intelligent recognition techniques to process images captured by airborne cameras to detect anomalies associated with a normal operating behavior of the aircraft. In general, the on-board aircraft control system may determine an anomaly based on comparisons of real-time images capturing a surrounding of the aircraft to baseline images associated with normal conditions or operations of the aircraft. The on-board aircraft control system may promptly alert crew members of a detected anomaly such that the crew members may take appropriate counter measures.

In some examples, this disclosure describes a method comprising: determining, by a computing system, based on a comparison of a baseline image of an aircraft to a live image of the aircraft, an anomaly associated with operation of the aircraft; generate, by the computing system, based on determining the anomaly, an alert associated with the anomaly; and output, by the computing system, the alert to a notification device of the aircraft.

In some examples, this disclosure describes a system comprising: memory; and processing circuitry having access to the memory and configured to: determine, based on a comparison of a baseline image of an aircraft and a live image of the aircraft, an anomaly associated with operation of the aircraft; generate, based on determining the anomaly, an alert associated with the anomaly; and output the alert to a notification device of the aircraft.

In some examples, this disclosure describes a computer-readable medium comprising instructions that, when executed by processing circuitry of an onboard computing system to determine, based on a comparison of a baseline image of an aircraft and a live image of the aircraft, an anomaly associated with operation of the aircraft; generate, based on determining the anomaly, an alert associated with the anomaly; and output the alert to a notification device of the aircraft.

The details of one or more examples are set forth in the accompanying drawings and the description below. Other features, objects, and advantages will be apparent from the description, drawings, and claims.

### BRIEF DESCRIPTION OF DRAWINGS

FIG. 1 is a conceptual diagram illustrating an example aircraft environment for onboard anomaly detection using one or more example cameras, in accordance with one or more techniques of this disclosure.
FIG. 2 is a block diagram illustrating an example aircraft environment with an example onboard computing system, in accordance with one or more techniques of this disclosure.
FIG. 3 is a conceptual diagram illustrating an example onboard computing system for detecting aircraft anomalies with images captured using one or more example cameras, in accordance with one or more techniques of this disclosure.
FIG. 4 is a conceptual diagram illustrating an example onboard computing system for detecting aircraft anomalies by inspecting images captured during operation of an aircraft housing the example onboard computing system, in accordance with one or more techniques of this disclosure.
FIG. 5 is a flow chart illustrating an example technique for detecting aircraft anomalies, in accordance with one or more techniques of this disclosure.

### DETAILED DESCRIPTION

In general, an onboard monitoring system for an aircraft may detect anomalous behavior associated with operation of the aircraft. The onboard monitoring system may perform real-time image processing of live images to identify issues of the aircraft during normal or baseline operation. In this way, the onboard monitoring system may quickly and efficiently alert a flight crew of anomalous behavior associated with operation of the aircraft (e.g., quickly alert the flight crew of an efficient determination of structural and/or non-structural issues associated with the aircraft based on images captured from existing onboard cameras).

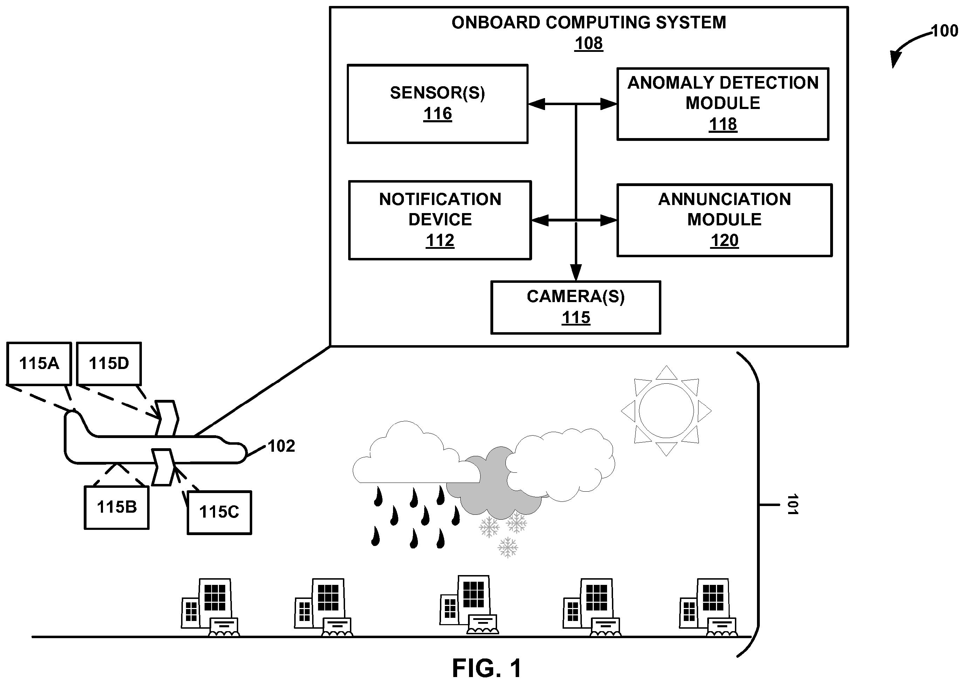

FIG. 1 is a conceptual diagram illustrating example aircraft environment 100 for onboard anomaly detection using one or more example cameras 115, in accordance with one or more techniques of this disclosure. Aircraft environment 100, in the example of FIG. 1, includes environmental features 101 and aircraft 102 with one or more cameras 115A-115B (collectively referred to herein as "cameras 115") and onboard computing system 108. Aircraft environment 100 may include environmental features 101 that represent a surrounding of aircraft 102 such as clouds or other weather-based features, land, ocean, birds, buildings, reflections from the sun, or any other condition potentially affecting a current or live visual inspection of aircraft 102.

Cameras 115 may include one or more sensors that capture visual characteristics, visual patterns, or other visual data associated with environmental features 101. For example, cameras 115 may include onboard cameras that capture the surroundings of aircraft 102 (e.g., to display as a part of onboard entertainment offered to passengers). Some of the existing onboard cameras used for in-flight entertainment purposes offer unique perspectives during the flight. In the example of FIG. 1, camera 115A may be disposed on a rear or vertical tail of aircraft 102; camera 115B may be disposed on a bottom or belly-portion of aircraft 102; camera 115C may be disposed on a first wing portion of aircraft 102; and camera 115D may be disposed on a second wing portion of aircraft 102. In some examples, cameras 115 may be a component external to onboard computing system 108. For example, cameras 115 may be cameras communicably coupled to onboard computing system 108 via a wired and/or wireless connection. In general, cameras 115 may record specific angles of aircraft 102.

Onboard computing system 108, in the example of FIG. 1, may include one or more cameras 115, notification device 112, one or more sensors 116, anomaly detection module 118, and annunciation module 120. Notification device 112 may output a notification to one or more operators of aircraft 102. For example, notification device 112 may include a device configured to output a sound as an alert or notification generated by annunciation module 120. Notification device 112, in some examples, may include a display device configured to output a graphical user interface element associated with a notification or alert generated by annunciation module 120.

One or more sensors 116 may sense information external to aircraft 102. Sensors 116 may be a part of one or more systems of aircraft 102 including, but not limited to, weather radar system, Global Positioning System (GPS), radar sensors, LIDAR sensors, accelerometers, temperature sensors, pressure sensors, gyroscopes, engine sensors, cabin sensors, landing gear sensors, or the like. In some examples, cameras 115 may be considered a part of one or more sensors 116. Sensors 116 may provide reference data for comparisons when cross checking with visual results captured as live images.

In some examples, aircrafts may experience anomalies associated with operation of the aircrafts without flight crew knowledge. For example, an aircraft may land with a partly open door to the front cargo hold without sensors detecting the issue and/or alerting the flight crew. In another example, an aircraft may lose a tire during takeoff without sensors determining an issue associated with the tire. In another example, an aircraft may experience a tail strike during takeoff while the flight crew continued to the destination without awareness. In another example, an aircraft may experience a blown tire during takeoff without detection or alerting a flight crew. In another example, a post-flight inspection may reveal that an aircraft's left-hand nose wheel was missing after takeoff without detection. Onboard computing system 108, according to the techniques described herein, may provide early detection and timely communication with relevant crew members and departments for proactive planning and measures, thereby significantly reducing likelihood of future accidents associated with operation of an aircraft.

Conventional airborne system monitors may not provide full coverage or indicate issues such as icing on the wing or partial structure damage (e.g., tail strike). Conventional aircraft systems may not detect non-structural issues using traditional exterior monitoring techniques. Such non-structural issues may be critical to the aircraft, such as leakage of fluid (e.g., fuel, hydraulic, etc.) leading to loss of fuel or hydraulic, wheel rim release or flailing tread damaging the surrounding equipment if retracted without awareness, etc. Manual checks for airborne camera operation (e.g., cameras 115) may not be sufficient, as pilots can be under high workload and have limited displays available to monitor camera. Additionally, observations made by passengers may be random and insufficient for comprehensive monitoring.

Techniques described herein provide enhanced aviation safety via quickly and efficiently detecting full coverage of structural issues (e.g., wing or tail damage) and/or non-structural issues (e.g., icing, fluid leakage, landing gear deployment issues, etc.) associated with aircraft operation based on a real-time processing of images captured using one or more onboard cameras of an onboard monitoring system of the aircraft. By onboard computing system 108 utilizing cameras 115 to record real-time images and combining them with image processing methods, the exterior of aircraft 102 may be assessed in real-time. When anomalies are detected, anomaly detection module 118 of onboard computing system 108 may identify an image of a faulty component of aircraft 102, annunciation module 120 of onboard computing system 108 may output alarm information to members associated with onboard computing system 108; thus, onboard computing system 108 may effectively prevent accidents associated with deviations of normal operation of aircraft 102 from occurring.

In accordance with the techniques described herein, onboard computing system 108 may detect anomalies by processing images captured using one or more cameras 115. Anomaly detection module 118 may collect one or more live images of aircraft 102 captured using cameras 115. Anomaly detection module 118 may determine, based on a comparison of a baseline image of aircraft 102 to a live image of aircraft 102, an anomaly associated with operation of aircraft 102. Operation associated with aircraft 102 may include normal behavior associated with structural and/or non-structural behavior of aircraft 102. For instance, operation associated with aircraft 102 may include normal or regulated flight patterns with respect to altitude, direction, or other flight details. Normal operation associated with aircraft 102 may correspond to baseline images that capture an exterior state of aircraft 102 via cameras 115 when aircraft 102 is operating with normal behavior for respective environmental states. For example, a baseline image of normal operation associated with aircraft 102 may correspond to a particular visual, reflective state (e.g., with units associated with color, brightness, contrast, etc.) of one or more wings of aircraft 102 (e.g., captured using cameras 115C and 115D) when aircraft is at a particular elevation and other conditions associated with environmental factors 101.

Based on anomaly detection module 118 determining an anomaly associated with operation of aircraft 102, anomaly detection module 118 may send an indication to annunciation module 120 of the anomaly. Annunciation module 120 may generate an alert associated with the anomaly. For example, annunciation module 120 may generate an alert for the anomaly based on configuration information indicating a modality and a recipient for the alert. Annunciation module 120 may output the alert to the recipient via notification device 112.

In some examples, anomaly detection module 118 may process one or more live images using image processing and/or image recognition techniques to determine one or more environmental features 101. Anomaly detection module 118 may determine an environmental state associated with aircraft 102 based on environmental features 101. For example, anomaly detection module 118 may determine an environmental state associated with aircraft 102 is landing based on a determination that environmental features 101 includes a landing strip. In this example, anomaly detection module 118 may determine that the environmental state associated with aircraft 102 corresponds to a baseline image of landing gear being captured using camera 115B. Anomaly detection module 118 may compare a baseline image associated with landing gear being captured using camera 115B during the determined environmental state to a live image captured using 115B when the environmental state is determined to identify whether an anomaly associated with operation of aircraft 102 is detected. Based on the comparison resulting in a determination that landing gear is not present in the live image, anomaly detection module 118 may send an indication of the anomaly to annunciation module 120. Annunciation module 120 may output an alert, via notification device 112, of the non-structural issue of the landing gear not being present such that a crew member (e.g., the pilot) may take appropriate action.

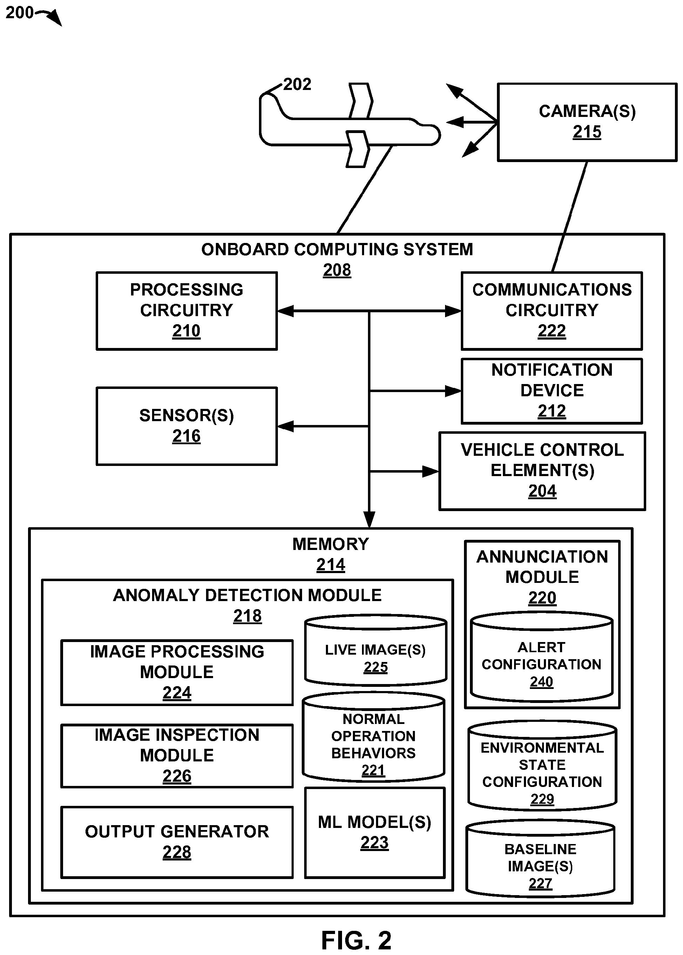

FIG. 2 is a block diagram illustrating example aircraft environment 200 with example onboard computing system 208, in accordance with one or more techniques of this disclosure. Aircraft environment 200, aircraft 202, onboard computing system 208, notification device 212, one or more cameras 215, one or more sensors 216, anomaly detection module 218, and annunciation module 220 of FIG. 2 may be example or alternative implementations of aircraft environment 100, aircraft 102, onboard computing system 108, notification device 112, one or more cameras 115, one or more sensors 116, anomaly detection module 118, and annunciation module 120 of FIG. 1, respectively.

In general, implementation of onboard computing system 208 may be achieved with either dedicated hardware module with various interface and software hosted, or part of integrated avionics platform. Camera(s) 215 can either be shared or dedicated, and both upstream cameras and downstream cameras may be included. Notification device 212 and/or annunciation module 220 (e.g., a display and annunciation) can be common practice of airborne systems. Communication among these systems and equipment can be achieved by airborne data bus or other feasible connections.

Onboard computing system 208, in the example of FIG. 2, may include processing circuitry 210, communications circuitry 222, notification device 212, sensor(s) 216, vehicle control element(s) 204, and memory 214. In some examples, as illustrated in FIG. 2, cameras 215 may be a component external to onboard computing system 208. In some instances, cameras 215 may be a component of one or more sensors 216.

One or more vehicle control elements 204 may include components of aircraft 202 communicatively coupled to onboard computing system 208 (e.g., via airborne data bus or other feasible connections). For example, vehicle control elements 204 may include landing gear of aircraft 202, wings of aircraft 202, an engine of aircraft 202, a fuel tank of aircraft 202, control circuitry for the aforementioned components of aircraft 202, or other operational parts of aircraft 202. Anomaly detection module 218 may identify anomalies associated with structural or non-structural aspects of one or more vehicle control element(s) 204 based on standard conditions (e.g., indicated in normal operation behaviors 221).

Communication circuitry 222 may facilitate communication between onboard computing system 208 and other components of aircraft 202, such as camera(s) 215 disposed externally to aircraft 202. Communications circuitry 222 may establish a direct or indirect communications link between onboard computing system 208 and camera(s) 215. Communications circuitry 222 may be coupled to one or more antennas and may transmit and/or receive information via the one or more antennas.

Processing circuitry 210 may include any one or more of a microcontroller (MCU) (e.g., a computer on a single integrated circuit containing a processor core, memory, and programmable input/output peripherals), a microprocessor (µP) (e.g., a central processing unit (CPU) on a single integrated circuit (IC), a controller, a digital signal processor (DSP), an application specific integrated circuit (ASIC), a field programmable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Accordingly, the terms "processing circuitry," "processor," or "controller," as used herein, may refer to any one or more of the foregoing structures or any other structure operable to perform techniques described herein.

Memory 214 may store information sensed by or received by onboard computing system 208. Memory 214 may include any type of non-transitory computer-readable storage media, such as random-access memory (RAM), read-only memory (ROM), programmable read-only memory (PROM), erasable programmable read-only memory (EPROM), one-time programmable (OTP) memory, electronically erasable programmable read-only memory (EEPROM), flash memory, or another type of volatile or non-volatile memory device. In some examples, the computer readable storage media of memory 214 may store instructions that cause processing circuitry 210 to execute the functions described herein. Memory 214 may include a plurality of modules including, but are not limited to, anomaly detection module 218 and annunciation module 220. The instructions for processing circuitry 210 may be stored within one or more modules of memory 214, e.g., anomaly detection module 218 and/or annunciation module 220.

In accordance with the techniques described herein, anomaly detection module 218 may determine an anomaly associated with operation of aircraft 202. Anomaly detection module 218 may utilize airborne camera(s) 215 to monitor specific aircraft exterior in real-time to compare live image(s) 225 captured using camera(s) 215 during operation of aircraft 202 to standard condition, baseline images of baseline image(s) 227 using images processing and/or intelligent recognition. Based on an error or discrepancy associated with a comparison of a live image to a baseline, standard condition image exceeding a predetermined range, anomaly detection module 218 may output an indication to annunciation module 220 to issue an alarm associated with the error or discrepancy. Annunciation module 220 may generate and issue an alarm that highlights a problem in display areas associated with the error or discrepancy to promptly alert crew members. For example, based on anomaly detection module 218 determining that a cabin door is ajar based on a comparison of a live image to a baseline image associated with the cabin door captured using camera(s) 215, annunciation module 220 may access data of alert configuration 240 to determine a modality and a recipient of an alert associated with the cabin door being ajar.

Image processing module 224 may perform image recognition and processing of live image(s) 225. For example, image processing module 224 may perform background interference processing of live image(s) 225 to pre-process or otherwise prepare live image(s) 225 for comparison to one or more baseline image(s) 227.

In some example, image processing module 224 may determine a baseline image of baseline image(s) 227 based on normal operation behaviors 221. For example, normal operation behaviors 221 may include data indicating behaviors, conditions, expectations, or other specifics associated with standard conditions of aircraft 202 given one or more environmental conditions (e.g., environmental factors 101 of FIG. 1), flight path specifications, or other standard operating conditions. Image processing module 224 may, for example, determine a time associated with when a live image of live image(s) 225 is captures and determine a baseline image of baseline image(s) 224 that corresponds to the time. In some instances, image processing module 224 may process live image(s) to determine an environmental state associated with aircraft 202. Image processing module 224 may select a baseline image of baseline image(s) 227 according to environmental state configuration 229 indicating a mapping of the baseline image to the environmental state. Image processing module 224 may send an indication of a baseline image selected for a live image to image inspection module 226

Image inspection module 226 may inspect images, such as comparing a live image to a baseline image. Image inspection module 226 may analyze current conditions to determine whether there is an anomaly or other discrepancy associated with a comparison of a live image to a baseline image. In some examples, image inspection module 226 may implement one or more machine learning (ML) model(s) 223. ML model(s) 223 may include traditional, generative, and/or other machine learning model trained or otherwise configured to classify live image(s) 225, generate baseline image(s) 227, or other defect detection tasks as described herein.

Output generator 228 may generate an indication of an alert based on monitoring results. For example, output generator 228 may generate an indication of an alert based on a baseline image that corresponds to a live image where an anomaly was determined by image inspection module 226. Output generator 228 may generate the indication to include data of the visual portion of the live image where the anomaly was detected. Output generator 228 may output the indication to annunciation module 220. Annunciation module 220 may sound an alarm, via notification device 212 for example, and notify crew members based on the visual portion of the live image being mapped to the alarm in alert configuration 240.

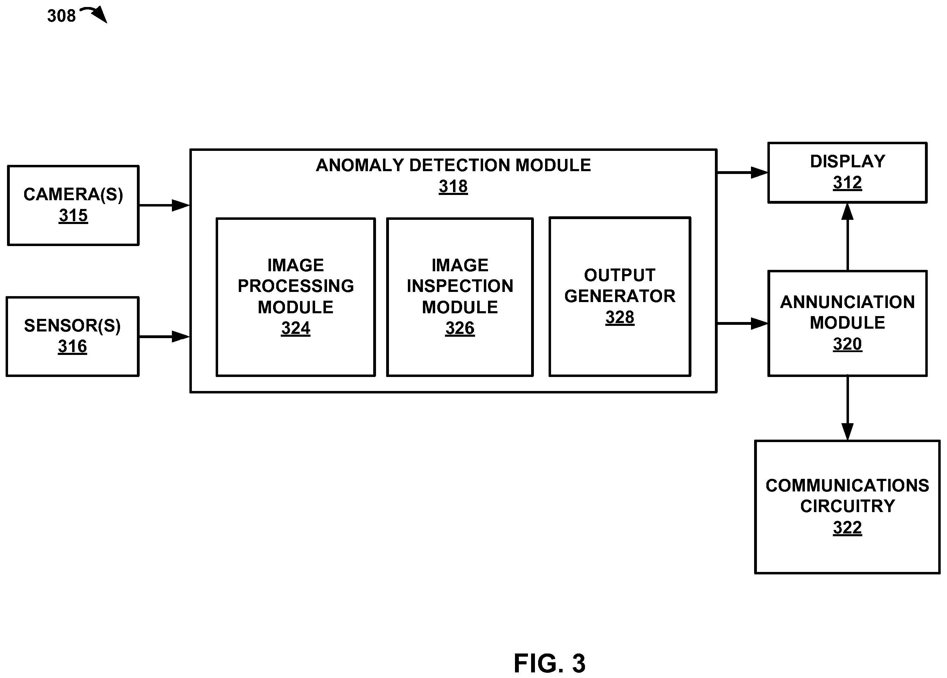

FIG. 3 is a conceptual diagram illustrating example onboard computing system 308 for detecting aircraft anomalies with images captured using one or more example cameras 315, in accordance with one or more techniques of this disclosure. Onboard computing system 308, display 312, one or more cameras 315, one or more sensors 316, anomaly detection module 318, annunciation module 320, communication circuitry 322, image processing module 324, image inspection module 326, and output generator 328 of FIG. 3 may be example or alternative implementations of Onboard computing system 208, notification device 212, one or more cameras 215, one or more sensors 216, anomaly detection module 218, annunciation module 220, communication circuitry 222, image processing module 224, image inspection module 226, and output generator 228 of FIG. 2, respectively.

Image processing module 324 of anomaly detection module 318 may process live images captured using camera(s) 315. Image processing module 324 may perform one or more image processing processes to live images such as one or more of: image jitter elimination, background removal, brightness enhancement and defogging, or other image processing technique.

In one example, image processing module 324 performs image jitter elimination of live images when an aircraft is in motion, camera 315 may shake the live image due to the vibration of the body of the aircraft, and these jitters are random. Therefore, image processing module 324 may eliminate the jitter before image inspection. Image processing module 324 may implement techniques such as RANSAC, Multi frame fusion method; Artificial intelligence algorithm include DelurGAN, or the like.

In one example of image processing module 324 performing background removal on live images when an aircraft is in motion relative to a static camera, image processing module 324 may implement techniques such as Pix2Pix, CycleGAN, Background Subtractor MOG2. In this way, image processing module 324 may remove background noise from live images to prepare live images for image inspection.

In some instances, image processing module 324 may apply image enhancements based on environmental conditions (e.g., environmental factors 101 such as time of day, weather, reflections, landscape features, clouds, etc.). For example, image processing module 324 may apply image brightness enhancement algorithms associated with histogram equalization or one or more pre-trained machine learning models (e.g., machine learning model(s) 223 of FIG. 2) such as Zero-DCE or EnlightenGAN. In another example, image processing module may apply image defogging techniques to remove clouds or other foggy conditions of environmental factors using techniques such as NLD and RETINEX or one or more pre-trained machine learning models (e.g., machine learning model(s) 223 of FIG. 2) such as DehazeNet, MSCNN, EPDN, or the like.

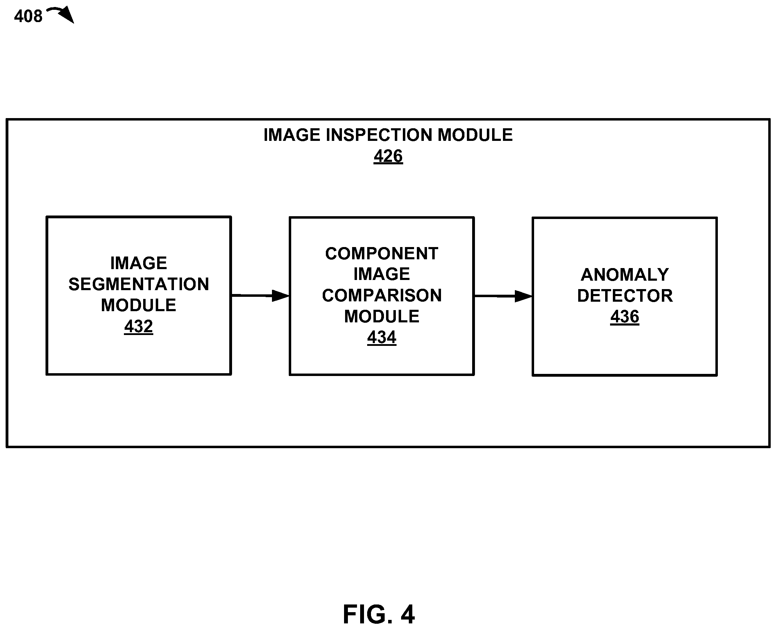

Image inspection module 326 may determine whether live images of an aircraft is associated with an anomaly. For example, image inspection module 326 may compare a standard, baseline image of an aircraft with a real-time, live image to find an abnormality associated with a standard operation of the aircraft. Baseline images may be taken prior to flight or determined based on previous times where operation of the aircraft are standard or otherwise normal. In some instances, image inspection module 326 may compare a live image to a baseline image in continuous or determined intervals. Image inspection module 326 may implement one or more machine learning models (e.g., ML models 223 of FIG. 2) to accurately predict anomalies associated with operation of an aircraft. Further detail of image inspection module 326 comparing a live image to a baseline image is described in FIG. 4.

Output generator 328 may prepare an alert for an anomaly determined using image inspection module 326. In other words, output generator 328 may provide proper data to human machine interface if an anomaly is detected. Output generator 328 may generate an output containing two parts of data: (1) data for display (e.g., via a notification device) to highlight a portion of a live image with an anomaly (e.g., add to a red box to indicate abnormal parts of live image, enlarge the display of abnormal part in live image to crew member, sound an alarm or flash a light at a position where an abnormality occurs continuously with respect to where an abnormality is detected on a live image, etc.; and (2) data for annunciation in cockpit system (e.g., an output that may trip the corresponding alert according to alert configurations or flight specifications).

Display 312 may represent a visual human interface in a cockpit system to show the video of an anomaly of a live image captured from camera(s) 315, which can be a Multi-Function Display (MFD). Annunciation module 320 may be implemented by existing cockpit systems by various ways for pilot awareness of aircraft anomalies. Annunciation module 320 may create annunciations that lead to emergency procedure directly or remind pilot to confirm the anomaly by checking the display, which shows details of the comparison between live images and baseline images captured using cameras 315.

Annunciation module 320 may communication alerts or other annunciations via display 312 and/or communication circuitry 322. For example, annunciation module 320 may generate and output a message on display notifying the pilot there may be a fluid leakage, wheel tire failure, tail strike, etc., based on an anomaly determined in a live image. The message may include a general message or dedicated message for a specific component (e.g., one or more of vehicle control element(s) 204 of FIG. 2) having an issue. In another example, annunciation module 320 may generate and output a warning light on a cockpit panel with color, like yellow and red, for direct awareness of a critical anomaly. In another instance, annunciation module 320 may generate and output an audio with clear message to the pilot for his attention is needed for the critical anomaly.

FIG. 4 is a conceptual diagram illustrating example onboard computing system 408 for detecting aircraft anomalies by inspecting images captured during operation of an aircraft housing example onboard computing system 408, in accordance with one or more techniques of this disclosure. Onboard computing system 408 and image inspection module 426 may be example or alternative implementations of onboard computing system 308 and image inspection module 326 of FIG. 3, respectively.

Image segmentation module 432 of image inspection module 426 may split a live image into separate parts. Image segmentation module 432 may be based on a target portion of an aircraft associated with an anomaly to be checked. For example, image segmentation module 432 may select a target portion of a live image associated with landing gear when performing image segmentation based on determining whether landing gear is being deployed. Image segmentation module 432 may perform segmentation by dividing a live image into N equally sized parts. Image segmentation module 432 may implement a segmentation approach based on a target portion or condition being checked for. For example, image segmentation module 432 may use background removal target a wing portion or engine portion of an aircraft to determine whether there is icing or fluid leakage at a target portion of the aircraft during operation of the aircraft.

Component image comparison module 434 may compare live images to baseline images continuously and/or compare live images to baseline images periodically. Component image comparison module 434 may implement traditional convolution or CNN, Structural Similarity, ORB (Oriented FAST and Rotated BRIEF), and/or one or more machine learning models (e.g., ML models 223 of FIG. 2) based on image comparison inputs. Component image comparison module 434 may generate comparison data such as a dissimilarity value of a comparison of a live image to a baseline image.

In some examples, component image comparison module 434 may create a matrix representing the difference between a live image and a baseline image. Component image comparison module 434 may compute difference values within a certain area of the difference matrix (which are greater than a certain threshold), the difference areas with differences greater than a certain threshold are obtained. This difference area corresponds to the difference area of the live image compared to standard operation targeted in a baseline image.

Anomaly detector 436 may determine whether an issue exists based on the comparison data output by image comparison module 434. Anomaly detector 436 may sort comparison data and send alert for anomalies an appropriate way as previously discussed. If comparison data indicates discrepancies or other differences that exceed a certain threshold, anomaly detector 436 may trigger generation and output of an anomaly based on the comparison data.

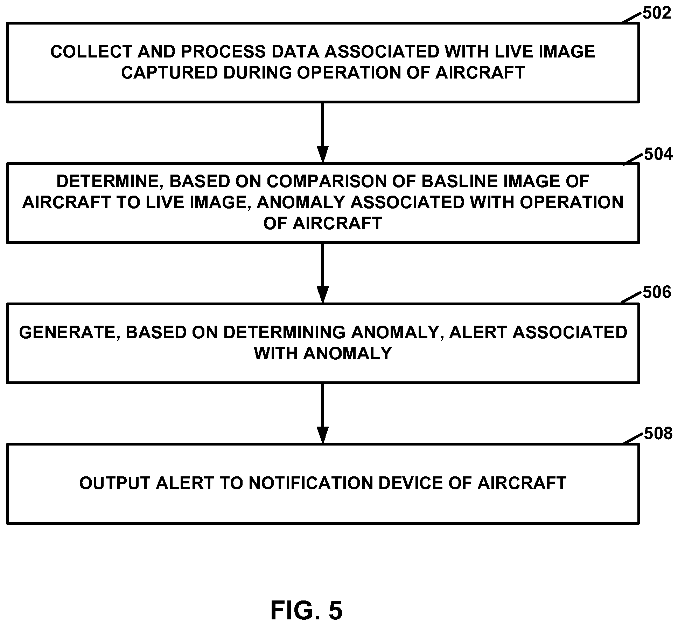

FIG. 5 is a flow chart illustrating an example technique for detecting aircraft anomalies, in accordance with one or more techniques of this disclosure. FIG. 5 may be discussed with respect to FIG. 1 for example purposes only.

Onboard computing system 108 may collect and process data associated with a live image captured during operation of aircraft 102 (502). Onboard computing system 108 may determine, based on a comparison of a baseline image of aircraft 102 to the live image, an anomaly associated with operation of aircraft 102 (504). Onboard computing system 108 may generate, based on determining the anomaly, an alert associated with the anomaly (506). Onboard computing system 108 may output the alert to notification device 112 of aircraft 102 (508).

In one or more examples, the functions described above may be implemented in hardware, software, firmware, or any combination thereof. For example, the various components of onboard computing system 108 and/or external computing system 118 may be implemented in hardware, software, firmware, or any combination thereof. If implemented in software, the functions may be stored on or transmitted over, as one or more instructions or code, a computer-readable medium and executed by a hardware-based processing unit. Computer-readable media, e.g., memory 114, may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor" and "processing circuitry," as used herein may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various examples of the disclosure have been described. These and other examples are within the scope of the following claims.

## Claims

1. A system comprising:
memory; and
processing circuitry having access to the memory and configured to:
compare a baseline image of an aircraft and a live image of the aircraft;
determine, based on the comparison of the baseline image of the aircraft and the live image of the aircraft, an anomaly associated with operation of the aircraft;
generate, based on determining the anomaly, an alert associated with the anomaly; and
output the alert to a notification device of the aircraft.

2. The system of claim 1, wherein the anomaly associated with operation of the aircraft indicates a non-structural anomaly associated with the aircraft.

3. The system of claim 1, wherein to determine the anomaly, the processing circuity is configured to select the baseline image from a plurality of baseline images based on an environmental state of the aircraft.

4. The system of claim 3, wherein the processing circuitry is further configured to determine the environmental state of the aircraft based on the live image.

5. The system of claim 3, wherein to compare the baseline image of the aircraft to the live image of the aircraft, the processing circuitry is configured to select a processing technique corresponding to the environmental state.

6. The system of claim 3, wherein the environmental state includes the baseline image mapped to one or more of: an environmental factor, a vehicle control element condition, or an alarm condition.

7. The system of claim 1, wherein the alert includes an indication of one or more of: a vehicle control element or a sensor associated with the anomaly.

8. The system of claim 1, wherein to compare the baseline image of the aircraft to the live image of the aircraft, the processing circuitry is configured to generate comparison data based on providing a machine learning model the baseline image and the live image, wherein the comparison data indicates a dissimilarity between the aircraft in the baseline image and the aircraft the live image.

9. The system of claim 1, wherein the processing circuitry is further configured to select the baseline image based on a target portion of the live image associated with the operation of the aircraft.

10. A method comprising:
comparing, by processing circuitry, a baseline image of an aircraft and a live image of the aircraft;
determining, by the processing circuitry, based on the comparing of the baseline image of the aircraft and the live image of the aircraft, an anomaly associated with operation of the aircraft;
generating, by the processing circuitry, based on determining the anomaly, an alert associated with the anomaly; and
outputting, by the processing circuitry, the alert to a notification device of the aircraft.

11. The method of claim 10, wherein the anomaly associated with operation of the aircraft indicates a non-structural anomaly associated with the aircraft.

12. The method of claim 10, wherein determining the anomaly comprises selecting the baseline image from a plurality of baseline images based on an environmental state of the aircraft.

13. Computer-readable media comprising instructions that, when executed by processing circuitry of an onboard computing system of an aircraft, causes the processing circuitry to:
compare a baseline image of the aircraft and a live image of the aircraft;
determine, based on the comparison of the baseline image of the aircraft and the live image of the aircraft, an anomaly associated with operation of the aircraft;
generate, based on determining the anomaly, an alert associated with the anomaly; and
output the alert to a notification device of the aircraft.

14. The computer-readable media of claim 13, wherein the anomaly associated with operation of the aircraft indicates a non-structural anomaly associated with the aircraft.

15. The computer-readable media of claim 13, wherein the anomaly associated with operation of the aircraft indicates a non-structural anomaly associated with the aircraft.
